# EUROPÄISCHE PATENTSCHRIFT

(11) **EP 2 300 281 B1**
(45) Veröffentlichungstag und Bekanntmachung des Hinweises auf die Patenterteilung: **08.02.2012**
(21) Anmeldenummer: 09780470.2
(22) Anmeldetag: 10.07.2009
(51) Int. Cl.: B60R 25/02, B60R 25/04

(54) **VORRICHTUNG ZUR ANSTEUERUNG EINES SPERRGLIEDES**
DEVICE FOR ACTUATING A LOCKING MEMBER
DISPOSITIF SERVANT À COMMANDER UN ÉLÉMENT DE BLOCAGE

(30) Priorität: 11.07.2008 DE 102008032585
(43) Veröffentlichungstag der Anmeldung: 30.03.2011
(73) Patentinhaber: Huf Hülsbeck & Fürst GmbH & Co. KG, 42551 Velbert (DE)
(72) Erfinder: MÖNIG, Stefan, 58332 Schwelm (DE); SCHINDLER, Mirko, 42549 Velbert (DE); KLEIN, Matthias, 85221 Dachau (DE); SIMON, Jörg, 42489 Wülfrath (DE)
(74) Vertreter: Vogel, Andreas
(86) Internationale Anmeldenummer: PCT/EP2009/058869
(87) Internationale Veröffentlichungsnummer: WO 2010/004046

(56) Entgegenhaltungen:
- EP-A- 1 504 972
- WO-A-2008/002096
- US-A1- 2004 069 027

## Beschreibung

Die Erfindung richtet sich auf eine Vorrichtung zur Ansteuerung eines Sperrgliedes eines funktionswesentlichen Bauteils, insbesondere einer Lenksäule eines Kraftfahrzeuges mit einem Getriebe, das mit dem Sperrglied in mechanischer Wirkverbindung steht, wobei das Sperrglied in eine Verriegelungsstellung und in eine Entriegelungsstellung und umgekehrt bewegbar ist, wobei in der Verriegelungsstellung das Sperrglied in das funktionswesentliche Bauteil eingreift, in der Entriegelungsstellung das Sperrglied losgelöst vom funktionswesentlichen Bauteil ist, und eine für einen Benutzer zugängliche Betätigungseinheit vorgesehen ist, die in einem Normalbetrieb mit dem Getriebe in Signalverbindung steht, wodurch über eine bewusste Aktivierung der Betätigungseinheit eine elektronische Ansteuerung des Getriebes bewirkbar ist, das das Sperrglied in seine jeweilige Stellung bringt.

In der DE 10 2006 017 875 ist eine Vorrichtung zur Ansteuerung eines Sperrgliedes einer Lenksäule eines Kraftfahrzeuges offenbart, wobei ein Sperrglied vorgesehen ist, das durch ein Steuerelement in zwei Stellungen bewegt werden kann. Zum einen kann das Sperrglied eine Verriegelungsstellung einnehmen, in der es durch eine Öffnung aus der Vorrichtung herausragt und in einer Wirkverbindung mit der Lenksäule steht. In dieser Stellung des Sperrgliedes ist die Lenksäule blockiert, so dass der Benutzer des Kraftfahrzeuges die Lenkeinheit, insbesondere das Lenkrad, den Lenker etc. nicht bewegen kann. Zum anderen kann das Sperrglied eine Entriegelungsstellung einnehmen, bei der es weitestgehend innerhalb der Vorrichtung angeordnet ist und losgelöst von der Lenksäule positioniert ist. Darüber hinaus ist ein Sicherungselement vorgesehen, womit das Sperrglied zumindest in der Entriegelungsstellung arretiert werden kann.

Die US 2004/069027 offenbart eine Vorrichtung zur elektrischen Ansteuerung eines zweiteiligen Sperrgliedes einer Lenksäule eines Kraftfahrzeuges. Wenn der Motor läuft, wird die elektrische Verbindung zwischen einer benutzerseitigen Betätigungseinheit zum Sperrglied unterbrochen, so dass die Lenksäule während der Fahrt nicht gesperrt werden kann.

Derartige Verriegelungsvorrichtungen werden beispielsweise über eine Betätigungseinheit vom Benutzer aktiviert, die fest am Kraftfahrzeug angeordnet ist. Die Betätigungseinheit steht mit dem Getriebe in Signalverbindung, wodurch über eine bewusste Aktivierung der Betätigungseinheit eine elektronische Ansteuerung des Getriebes erzielt wird, das wiederum das Sperrglied in seine jeweilige Verriegelungs- oder Entriegelungsstellung bringt. Falls in einem Notfall eine Stromversorgung nicht vorliegen sollte, ist es für den Benutzer ausgeschlossen über die Betätigungseinheit eine entsprechende Bewegung des Sperrgliedes in seiner jeweiligen Stellung auszulösen.

Es ist Aufgabe der vorliegenden Erfindung, eine Vorrichtung zur Ansteuerung eines Sperrgliedes zu schaffen, bei der die genannten Nachteile vermieden werden, insbesondere eine Vorrichtung bereitgestellt wird, bei der trotz etwaig auftretender elektronischer Störungen oder Ausfällen stets für den Benutzer die Möglichkeit besteht eine Bewegung des Sperrgliedes auf einfacher Weise auszulösen.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Betätigungseinheit im Normalbetrieb vom Getriebe mechanisch entkoppelt ist und in einem Notfallbetrieb die Betätigungseinheit derart mit dem Getriebe mechanisch koppelbar ist, dass über eine manuelle Betätigung der Betätigungseinheit eine Bewegung des Sperrgliedes in seine jeweilige Stellung erfolgt.

Erfindungsgemäß ist im Normalbetrieb die Betätigungseinheit vom Getriebe mechanisch losgelöst, so dass über die Aktivierung der Betätigungseinheit ein Signal ausgelöst wird, wodurch eine entsprechende elektronische Ansteuerung des Getriebes erzielt wird, welches das Sperrglied in die gewünschte Stellung fährt. Falls nun in einem Notfallbetrieb keine Stromversorgung der erfindungsgemäßen Vorrichtung bereitgestellt werden kann, ist eine rein manuelle Bewegung des Getriebes durch den Benutzer durchführbar. Dazu ist vorgesehen, dass die Betätigungseinheit in einem derartigen Notfallbetrieb mit dem Getriebe mechanisch gekoppelt werden kann, so dass beispielsweise die Betätigungseinheit und das Getriebe sich in einem Formschluss befinden. Der Benutzer kann über die Betätigungseinheit eine gewisse Kraft auf das Getriebe übertragen, welches wiederum eine entsprechende Bewegung des Sperrgliedes in seine jeweilige Stellung auslöst.

In einer möglichen Ausführungsform weist die Betätigungseinheit ein Betätigungselement sowie einen Aufnahmekörper auf, in den für den Notfallbetrieb ein Notschlüssel einbringbar ist. Der Notschlüssel kann beispielsweise in einen ID-Geber, den der Benutzer bei sich trägt, angeordnet sein. Die Betätigungseinheit ist vorzugsweise verschiebbar innerhalb des Gehäuses der erfindungsgemäßen Vorrichtung gelagert. Für den Notfallbetrieb wird der Notschlüssel in die Betätigungseinheit eingeschoben. Durch eine entsprechende Kraftaufbringung auf den Schlüssel entsteht eine Bewegung der Betätigungseinheit in Richtung des Getriebes bis die Betätigungseinheit in Wirkverbindung zum Getriebe steht. Über eine Drehung der Betätigungseinheit, die beispielsweise auch als Schließzylinder ausgeführt sein kann, erfolgt eine Betätigung des Getriebes, wodurch eine Kraftübertragung auf das Sperrglied erfolgt, das sich wiederum in seine jeweilige Stellung bewegt.

Zweckmäßigerweise ist die Betätigungseinheit zwischen einer Ruhelage und einer Betätigungslage innerhalb des Gehäuses der erfindungsgemäßen Vorrichtung bewegbar, wobei in der Ruhelage die Betätigungseinheit losgelöst zum Getriebe positioniert ist und in der Betätigungslage die Betätigungseinheit in Wirkverbindung mit dem Getriebe ist.

Vorteilhafterweise ist das Betätigungselement der Betätigungseinheit mit einem Näherungssensor oder einem Berührungssensor ausgestattet. In einer weiteren Ausführungsform kann für den Normalbetrieb das Betätigungselement den Aufnahmekörper abschirmen. Das bedeutet, dass für den Benutzer der Aufnahmekörper. in den der Notschlüssel einbringbar ist, nicht sichtbar ist. Für den Notfallbetrieb kann das Betätigungselement, das kappenartig auf dem Aufnahmekörper angeordnet sein kann, vom Aufnahmekörper entfernt weggeschwenkt, wegbewegt, etc. werden. Beispielsweise kann das Betätigungselement gelenkartig am Aufnahmekörper angeordnet sein. Alternativ kann das Betätigungselement gewindeartig an der Betätigungseinheit aufgeschraubt sein.

In einer weiteren vorteilhaften Ausgestaltung weist das Betätigungselement ein Anzeigemittel auf, das zur Darstellung von Informationen für den Benutzer dient. Es ist denkbar, dass das Betätigungselement auch zum Motorstart des Kraftfahrzeuges dienen kann. Das bedeutet, dass sowohl zur Entriegelung und Verriegelung des Kraftfahrzeuges als auch zum Starten des Motors das Betätigungselement als einziges Bauteil dient. Über das Anzeigemittel kann dem Benutzer informativ mitgeteilt werden, dass beispielsweise die Zündung aktiviert ist oder der Motor gestartet ist.

Um eine zuverlässige Funktionsweise sicherzustellen, weist das Getriebe eine Arretiervorrichtung auf, die das Sperrglied in seiner jeweiligen Stellung hält. Die Arretiervorrichtung gewährleistet, dass das Sperrglied zuverlässig in der Verriegelungsstellung oder in der Entriegelungsstellung verbleibt. Etwaige Vibrationen während des Fahrbetriebes des Kraftfahrzeuges führen nicht dazu, dass das Sperrglied ungewollt aus seiner jeweiligen Stellung bewegt wird, da die Arretiervorrichtung eine zuverlässige Blockierung des funktionswesentlichen Bauteils bewirkt.

In einer bevorzugten Ausgestaltung weist das Getriebe ein huberzeugendes Übertragungsglied auf, das auf einen Hebel wirkt, der zwischen dem Übertragungsglied unter dem Sperrglied bewegbar angeordnet ist. Das Übertragungsglied, das beispielsweise durch einen Elektromotor angetrieben werden kann, ist in einer Ausführungsvariante scheibenartig ausgebildet, wobei das Übertragungsglied drehbar um eine Achse gelagert ist.

Vorteilhafterweise ist der Hebel mit einem vorsprungartigen Kontaktbereich ausgeführt, der in eine spiralartige Kulissenführung des Übertragungsgliedes eingreift. Wird das Übertragungsglied angetrieben, gleitet der Kontaktbereich des Hebels entlang der Kulissenführung, wodurch der Hebel um die Achse verschwenkt wird. Durch die Bewegung des Hebels wird das Sperrglied angetrieben.

Eine weitere, die Erfindung verbessernde Maßnahme kann vorsehen, dass die Arretiervorrichtung ein Verriegelungselement aufweist, das in einer Kulisse geführt ist. Vorteilhafterweise ist der Hebel, der die Kraft vom Übertragungsglied auf das Sperrglied überträgt, mit der genannten Kulisse ausgebildet. Zweckmäßigerweise ist das Verriegelungselement derart an der Arretiervorrichtung angeordnet, dass das Verriegelungselement zwischen einer ersten und einer zweiten Position entlang der Kulisse bewegbar ist. Während das Verriegelungselement sich in der ersten Position befindet, wird das Sperrglied durch die Arretiervorrichtung sowohl in der Verriegelungsstellung als auch in der Entriegelungsstellung sichernd gehalten. Während der Bewegung des Sperrgliedes zwischen der Verriegelungsstellung und der Entriegelungsstellung befindet sich das Verriegelungselement in der zweiten Position.

Das Verriegelungselement hat gemäß der vorliegenden Erfindung somit zwei unterschiedliche Funktionen: Zum einen ist es ein wesentliches Bestandteil der Arretiervorrichtung. Zum anderen greift das Verriegelungselement mit einem Nocken in die Kulisse des Hebels ein, wodurch eine Kraftübertragung vom Hebel auf das Sperrglied bewirkt werden kann, so dass eine zuverlässige Bewegung des Sperrgliedes in seine jeweilige Stellung erzielt wird. In einer bevorzugten Ausführungsform sind der Hebel und das Sperrglied drehbar um eine Achse gelagert, wobei insbesondere der Hebel und das Sperrglied um die gleiche Achse verschwenkbar sind, wodurch ein kompakter Aufbau der zueinander verschwenkbaren Bauteile innerhalb des Gehäuses der erfindungsgemäßen Vorrichtung erzielt werden kann.

Des Weiteren kann eine Positionserfassungseinheit vorgesehen sein, die erst bei einer definierten Stellung der Lenkungseinheit des Kraftfahrzeuges eine Bewegung des Sperrgliedes in die Verriegelungsstellung erlaubt. Die vorliegende Erfindung kann sich auf eine Lenkungsverriegelung eines Kraftfahrzeuges, insbesondere eines Motorrads, beziehen, bei der erst ab einer definierten Stellung der Lenkungseinheit eine Überführung des Sperrgliedes in die Verriegelungsstellung möglich ist. Hierfür können Sensorelemente oder Tasterelemente die elektronisch und/oder mechanisch den Lenkeranschlag der Lenkungseinheit detektieren, zum Einsatz kommen.

In einer möglichen Ausführungsform der Erfindung erfasst die Positionserfassungseinheit mechanisch die Position der Lenkungseinheit, wobei das Getriebe über einen Schalter in Abhängigkeit von der Position der Lenkungseinheit ansteuerbar ist, um das Sperrglied in die Verriegelungsstellung zu bringen. Vorteilhafterweise ist die Positionserfassungseinheit fest, insbesondere mit dem Rahmen des Kraftfahrzeuges, insbesondere des Motorrades verbunden, wobei durch eine Bewegung der Lenkungseinheit die Positionserfassungseinheit unbeweglich am Kraftfahrzeug in ihrer Stellung verbleibt.

Erfindungsgemäß ist es denkbar, dass die Betätigungseinheit an der Lenkungseinheit angeordnet ist, wobei die Positionserfassungseinheit über der Position der Betätigungseinheit eine entsprechende Bewegung des Sperrgliedes auslöst, wobei insbesondere die Betätigungseinheit ein Aktivierungselement aufweist, die mit einer Kontur der Positionserfassungseinheit zusammenwirkt. Vorteilhafterweise ist das Aktivierungselement zwischen einer Ruhestellung und einer Aktivierungsstellung bewegbar, wobei in der Aktivierungsstellung der Schalter eine Bewegung des Sperrgliedes in die Verriegelungsstellung auslöst. Hierbei kann die Kontur mit einem Wirkbereich ausgeführt sein, in dem sich das Aktivierungselement in seiner Aktivierungsstellung befindet, wobei der Wirkbereich als Öffnung, Einbuchtung oder Ausbuchtung ausgeführt ist. Der Schalter kann als Hallsensor, optischer Sensor, Berührungssensor etc. ausgestaltet sein.

Vorteilhafterweise kann vorgesehen sein, dass die erfindungsgemäße Vorrichtung durch eine Steuerelektronik überwacht wird. Aus sicherheitstechnischen Gründen ist es vorteilhaft, wenn neben der Erfassung der Position des Übertragungsgliedes auch die Position des Hebels und des Sperrgliedes erfasst werden. Dieses kann beispielsweise durch Sensoren, insbesondere Magnetfeldsensoren, erfolgen, die das magnetische Feld beispielsweise eines auf dem Übertragungsglied, Hebel, Verriegelungselement oder Sperrglied angebrachten Permanentmagneten erfassen. Dadurch kann eine elektronische Steuerung die Funktionsfähigkeit der mechanischen Kopplung zwischen dem Übertragungsglied und dem Sperrglied überwachen sowie eine Manipulation erkennen.

Die erfindungsgemäße Vorrichtung kann als elektrische Lenkungsverriegelung für Fahrzeuge zum Einsatz kommen, wobei die Vorrichtung zudem problemlos mit insbesondere so genannten Keyless-Entry-Systemen kombinierbar ist. Die erfindungsgemäße Vorrichtung wird durch eine Aktivierung der Betätigungseinheit, insbesondere nach einem anschließenden Authentifizierungsvorgang gestartet. Dabei ermöglicht die Erfindung selbstverständlich eine Rückmeldung dahingehend, ob die betreffende Vorrichtung zuverlässig das funktionswesentliche Bauteil, insbesondere die Lenksäule des Motorrads blockiert oder nicht. Dies kann zum Beispiel durch eine optische oder akustische Meldevorrichtung dargestellt werden. Eine mögliche Ausführungsform ist, dass diese Information über das Anzeigemittel des Betätigungselementes dem Benutzer visualisiert wird.

Weitere Vorteile, Merkmale und Einzelheiten der Erfindung ergeben sich aus der nachfolgenden Beschreibung, in der unter Bezugnahme auf die Zeichnungen mögliche Ausführungsformen der Erfindung beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Vorrichtung zur Ansteuerung eines Sperrgliedes einer Lenksäule eines Motorrads mit einer Betätigungseinheit und einem Getriebe, wobei die Betätigungseinheit vom Getriebe entkoppelt ist,
- Figur 2: die Vorrichtung gemäß Figur 1, wobei die Betätigungseinheit in Wirkverbindung mit dem Getriebe ist,
- Figur 3: eine Seitenansicht der Vorrichtung gemäß Figur 1,
- Figur 4: eine weitere Seitenansicht der Vorrichtung gemäß Figur 1, die eine Arretiervorrichtung umfasst, die das Sperrglied in der Verriegelungsstellung hält,
- Figur 5: die Vorrichtung gemäß Figur 4, wobei die Arretiervorrichtung sich in einer derartigen Lage befindet, dass eine Bewegung des Sperrgliedes freigegeben ist,
- Figur 6: die Vorrichtung gemäß Figur 4, wobei das Sperrglied sich in die Entriegelungsstellung bewegt,
- Figur 7: die Vorrichtung gemäß Figur 4, wobei das Sperrglied sich in der Entriegelungsstellung befindet und die Arretiervorrichtung eine Bewegung des Sperrgliedes blockiert,
- Figur 8: die Vorrichtung gemäß Figur 7, wobei die Arretiervorrichtung sich in einer derartigen Lage befindet, dass eine Bewegung des Sperrgliedes in die Verriegelungsstellung freigegeben ist,
- Figur 9: eine weitere Ausführungsform der erfindungsgemäßen Vorrichtung gemäß Figur 1, wobei die Betätigungseinheit mit einer Positionserfassungseinheit zusammenwirkt,
- Figur 10: eine weitere Ausgestaltungsmöglichkeit der Positionserfassungseinheit, die mit der Betätigungseinheit zusammenwirkt und
- Figur 11: eine weitere Ausführungsalternative einer Betätigungseinheit, die mit einer Positionserfassungseinheit zusammen arbeitet.

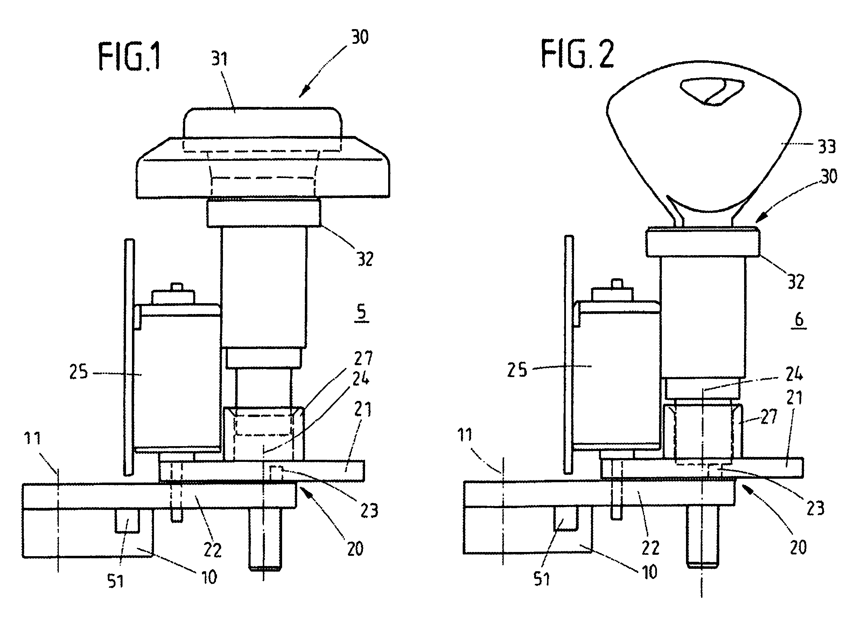

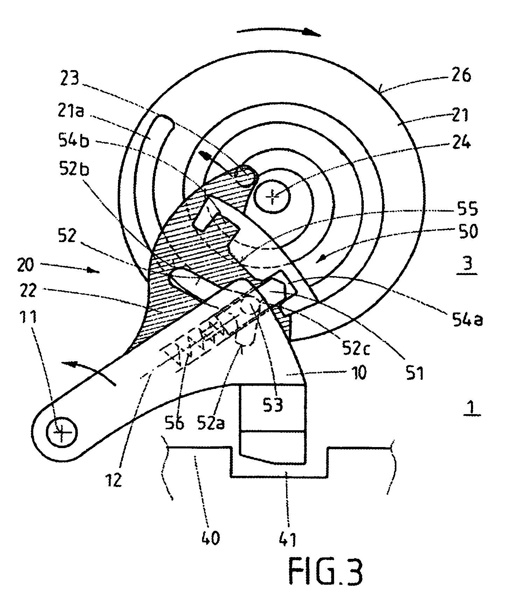

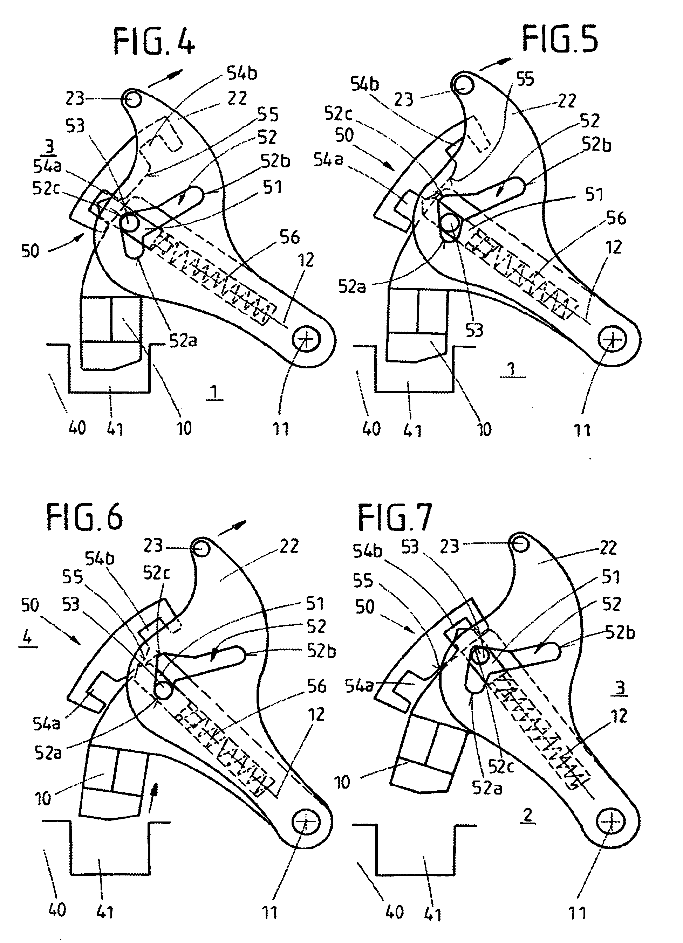

Die Ausführungsbeispiele gemäß der Figuren 1 bis 11 zeigen rein schematisch mögliche Ausführungsformen einer Vorrichtung zur Steuerung eines Sperrgliedes 10 eines funktionswesentlichen Bauteils 40. Bei dem Bauteil 40 handelt es sich um eine Lenksäule 40 eines Motorrads. Die Vorrichtung weist ein Getriebe 20 auf, das mit dem Sperrglied 10 in mechanischer Kopplung steht. In den Figuren 3 und 4 befindet sich das Sperrglied 10 in einer Verriegelungsstellung 1. Über das Getriebe 20 ist das Sperrglied 10 aus der Verriegelungsstellung 1 in eine Entriegelungsstellung 2 bewegbar, die in Figur 7 dargestellt ist. In der Verriegelungsstellung 1 ragt das Sperrglied 10 mit seinem freien Ende in eine Nut 41 der Lenksäule 40 hinein, wodurch die Lenksäule 40 gesperrt ist. Im Gegensatz dazu ist das Sperrglied 10 in der Entriegelungsstellung 2 losgelöst von der Lenksäule 40.

Das Getriebe 20 weist ein Übertragungsglied 21 auf, das als Antriebsrad ausgeführt ist und an einer Achse 24 drehbar gelagert ist. Das Übertragungsglied 21 wird über einen elektronischen Motor 25, der in Figur 1 und Figur 2 dargestellt ist, angetrieben. Der elektronische Motor 25 weist ein Ritzel auf, das auf einen Verzahnungsbereich 26 des Übertragungsgliedes 21 eingreift. Die Drehachse 24 des Übertragungsgliedes 21 sowie die nicht dargestellte Drehachse des Ritzels liegen parallel zueinander, wodurch eine Stirnradverzahnung zwischen dem Verzahnungsbereich 26 des Übertragungsgliedes 21 und dem Ritzel des Elektromotors 25 vorliegt.

Wie in Figur 1 und Figur 2 verdeutlicht ist, ist eine für einen Benutzer zugängliche Betätigungseinheit 30 vorgesehen, die in einem Normalbetrieb mit dem Getriebe 20 in Signalverbindung steht. Über eine bewusste Aktivierung der Betätigungseinheit 30 wird das Getriebe 20 elektronisch angesteuert, wodurch das Sperrglied 10 in seine jeweilige Stellung 1, 2 gebracht wird, welches im Folgenden anhand der Figuren 4 bis Figur 8 erklärt wird. Wie in Figur 1 gezeigt ist, ist die Betätigungseinheit 30 vom Getriebe 20 mechanisch entkoppelt. Für einen Notfallbetrieb, bei dem keine elektronische Versorgung der wesentlichen Bauteile vorliegt, kann die Betätigungseinheit 30 mit dem Getriebe 20 mechanisch gekoppelt werden, in dem ein Notschlüssel 33 in einen Aufnahmekörper 32, insbesondere Schließzylinder der Betätigungseinheit 30 geführt wird (siehe Figur 2). Der Aufnahmekörper 32 ist durch ein Betätigungselement 31 verdeckt, welches in Figur 1 zu erkennen ist. Dieses Betätigungselement 31 muss zunächst entfernt, verschwenkt oder in einer weiteren Alternative von dem Aufnahmekörper 32 wegbewegt werden, bevor der Notschlüssel 33 in den Aufnahmekörper 32 eingeführt wird.

Die Betätigungseinheit 30 ist in Figur 1 in einer Ruhelage 5 dargestellt. In dieser Ruhelage 5 ist die Betätigungseinheit 30 losgelöst zum Getriebe 20 positioniert. In Figur 2 ist die Betätigungseinheit 30 in einer Betätigungslage 6 gezeigt, bei der die Betätigungseinheit 30 in Wirkverbindung mit dem Getriebe 20 ist. Während der Notschlüssel 33 in den Aufnahmekörper 32 gesteckt wird, erfolgt eine translatorische Bewegung des Aufnahmekörpers 32 in Richtung des Übertragungsgliedes 21. In der Betätigungslage 6 der Betätigungseinheit 30 liegt eine formschlüssige Verbindung zwischen beiden Bauteilen 30, 21 vor. Über eine anschließende Drehung des Notschlüssels 33 um die Achse 24 erfolgt eine Krafteinleitung in das Getriebe 20, welches letztendlich eine entsprechende Bewegung des Sperrgliedes 10 über den Hebel 22 bewirkt.

Das freie Ende des Aufnahmekörpers 32 erstreckt sich sowohl in Figur 1 als auch in Figur 2 in eine am Übertragungsglied 21 vorgesehene Hülse 27. Der Innenbereich der Hülse 27 sowie das freie Ende des Übertragungsgliedes 21 sind derart geometrisch ausgeführt, dass in der Betätigungslage 6 ein Formschluss der Betätigungseinheit 30 und des Übertragungsgliedes 21 vorliegt, so dass durch eine manuelle Drehbewegung des Notschlüssels 33 eine zuverlässige Aktivierung des Getriebes 20 erzielbar ist.

Gemäß Figur 3 weist das Getriebe 20 ein huberzeugendes Übertragungsglied 21 auf, das auf den Hebel 22 wirkt, der zwischen dem Übertragungsglied 21 und dem Sperrglied 10 bewegbar angeordnet ist. Ferner weist das Getriebe 20 eine Arretiervorrichtung 50 auf, die das Sperrglied 10 in seiner jeweiligen Stellung 1, 2 zuverlässig halten kann. Die Arretiervorrichtung 50 weist ein Verriegelungselement 51 auf, das in einer Kulisse 52 des Hebels 22 geführt ist. In der Kulisse 52 greift ein Nocken 53 des Verriegelungselementes 51 ein, welches in Figur 4 bis Figur 8 verdeutlicht ist. Das Verriegelungselement 51 ist derart an der Arretiervorrichtung 50 angeordnet, dass das Verriegelungselement 51 zwischen einer ersten Position 3 und einer zweiten Position 4 entlang der Kulisse 52 bewegbar ist. In der Verriegelungsstellung 1, die in Figur 3 und Figur 4 dargestellt ist, und in der Entriegelungsstellung 2, die in Figur 7 dargestellt ist, hält die Arretiervorrichtung 50 das Sperrglied 10 sichernd fest, während das Verriegelungselement 51 sich in der ersten herausgefahrenen Position 3 befindet. In der ersten Position 3 erstreckt sich das Verriegelungselement 51 in eine erste Aufnahmeöffnung 54a, die fest am Gehäuse der erfindungsgemäßen Vorrichtung angeordnet ist.

Das Verriegelungselement 51 ist beweglich am Sperrglied 10 gelagert, wobei es hierbei federbelastet am Sperrglied 10 angeordnet ist. Das Verriegelungselement 51 ist entlang einer Achse 12 linear verschiebbar aus der ersten 3 in die zweite Position 4 und umgekehrt verschiebbar. Gemäß Figur 3 weist das Übertragungsglied 21 eine spiralartige Kulissenführung 21a auf, in die der Hebel 22 mit einem vorsprungartigen Kontaktbereich 23 eingreift. Der Hebel 22 und das Sperrglied 10 sind hierbei um eine gemeinsame Achse 11 drehbar gelagert. Die Kulissenführung 21a ist an der dem Aufnahmekörper 32 abgewandten Seite des Übertragungsgliedes 21 angeordnet.

Um nun das Sperrglied 10 aus seiner Verriegelungsstellung 1 in Richtung der Entriegelungsstellung 2 zu bewegen, erfolgt zunächst eine Drehung des Übertragungsgliedes 21 um seine Drehachse 24. Bezogen auf das Ausführungsbeispiel rotiert hierbei das Übertragungsglied 21 gemäß Figur 3 im Uhrzeigersinn um die Achse 24. Hierdurch wird bewirkt, dass der Kontaktbereich 23 entlang der Kulissenführung 21 a gegen den Uhrzeigersinn um die Achse 11 verschwenkt wird. Die Drehung des Übertragungsgliedes 21 kann sowohl über die Aktivierung der Betätigungseinheit 30 in dem Normalbetrieb als auch über eine manuelle Betätigung der Betätigungseinheit 30 im Notfallbetrieb erfolgen.

Während der Hebel 22 gemäß Figur 3 gegen den Uhrzeigersinn um die Achse 11 verschwenkt wird, welches gemäß den Figuren 4 bis 7 einer Bewegung des Hebels 22 im Uhrzeigersinn um die Achse 11 entspricht, erfolgt eine Kraftübertragung auf das Sperrglied 10, das die Verriegelungsstellung 1 aus Figur 3 und Figur 4 verlässt und die Entriegelungsstellung 2 gemäß Figur 7 erreicht. Während sich der Hebel 22 ausgehend von Figur 4 um die Drehachse 11 mit dem Uhrzeigersinn verschwenkt, übt die Kulisse 52 des Hebels 22 eine Kraft auf den Nocken 53 des Verriegelungselementes 51 aus, wodurch das Verriegelungselement 51 in Richtung Achse 11 linear innerhalb des Sperrgliedes 10 bewegt wird. Hierdurch verlässt das Verriegelungselement 51 die erste Aufnahmeöffnung 54a. Die Kulisse 52 ist ferner mit einem ersten 52a, einem zweiten Anschlagbereich 52b sowie einem Arretierbereich 52c ausgeführt. Ausgehend von der Position des Nockens 53 gemäß Figur 4, der am Arretierbereich 52c der Kulisse 52 anliegt, bewegt sich der Nocken 53 in Richtung des ersten Anschlagbereiches 52a. Solange der Nocken 53 den ersten Anschlagbereich 52a des Hebels 22 nicht erreicht hat, erfolgt lediglich eine Linearverschiebung des Verriegelungselementes 51 entlang der Achse 12, ohne dass das Sperrglied 10 aus seiner Verriegelungsstellung 1 bewegt wird. Erst wenn der Nocken 53 gemäß Figur 6 am ersten Anschlagbereich 52a der Kulisse 52 anliegt und der Hebel 22 über das Übertragungsglied 21 weiter um die Achse 11 verschwenkt wird, erfolgt eine Kraftübertragung auf das Sperrglied 10, das aus der Verriegelungsstellung 1 in Richtung der Entriegelungsstellung 2 um die Achse 11 mitverschwenkt wird.

Ab einem bestimmten Drehwinkel des Hebels 22 erreicht das Verriegelungselement 51 eine zweite Aufnahmeöffnung 54b, welches in Figur 7 dargestellt ist. Ist diese Drehposition des Hebels 22 erreicht, drückt eine Feder, die innerhalb des Sperrgliedes 10 angeordnet ist, das Verriegelungselement 51 in die zweite Aufnahmeöffnung 54b hinein, wobei gleichzeitig der Nocken 53 des Verriegelungselementes 51 innerhalb der Kulisse 52 zum Arretierbereich 52c gedrückt wird und an dieser Stelle verbleibt. Zwischen der ersten 54a und der zweiten Aufnahmeöffnung 54b befindet sich ein Widerlager 55, gegen dieses das Verriegelungselement 51 während seiner Bewegung von der ersten 54a zur zweiten Aufnahmeöffnung 54b und umgekehrt mit seinem freien Ende entlang gleitet.

Ausgehend von der entriegelten Stellung, die in Figur 7 schematisch dargestellt ist, erfolgt der Verriegelungsvorgang in der Art, dass über eine entgegengesetzte Drehung des Übertragungsgliedes 21, das bedeutet gegen den Uhrzeigersinn gemäß Figur 3, der Hebel 22 mit seinem Kontaktbereich 23 entlang der Kulissenführung 21 a geführt wird. Ausgehend von Figur 7 bedeutet dieses, dass der Hebel 22 gegen den Uhrzeigersinn um die Drehachse 11 verschwenkt wird, wobei gleichzeitig der Nocken 53 des Verriegelungselementes 51 von der Kulisse 52 des Hebels 22 aus dem Arretierbereich 52c in Richtung Achse 11 gedrückt wird. Gleichzeitig bewegt sich der Nocken 53 in die Richtung des zweiten Anschlagbereiches 52b der Kulisse 52 bis der Nocken 53 tatsächlich am zweiten Anschlagbereich 52b anliegt.

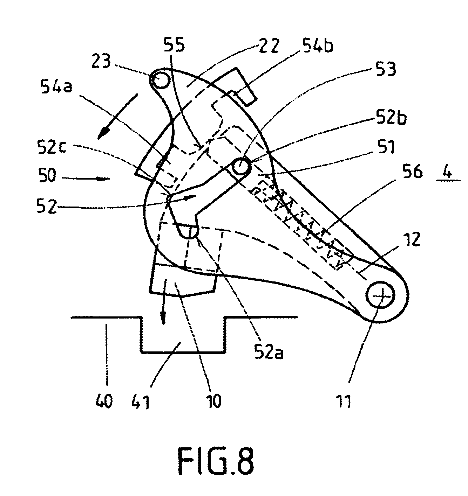

Während dieser Bewegung verbleibt das Sperrglied 10 unverändert in seiner Entriegelungsstellung 2. Gleichzeitig jedoch verlässt das Verriegelungselement 51 die zweite Aufnahmeöffnung 54b. Ist das Verriegelungselement 51 nicht mehr im Eingriff mit der zweiten Aufnahmeöffnung 54b, ist die zweite Position 4 des Verriegelungselementes 51 erreicht, bei der die der Achse 11 abgewandte Seite des Verriegelungselementes 51 das Widerlager 55 kontaktiert. Erst bei Kontaktierung des zweiten Anschlagbereichs 52b durch den Nocken 53 erfolgt durch die entsprechende Bewegung des Hebels 22 gegen den Uhrzeigersinn um die Achse 11 eine Kraftübertragung auf das Sperrglied 10, das sich aus der Entriegelungsstellung 2 in Richtung der Verriegelungsstellung 1 bewegt, welches in Figur 8 angedeutet ist. Ist der entsprechende Drehwinkel des Hebels 22 erreicht, wird das Verriegelungselement 51 durch die innerhalb des Sperrgliedes 10 wirkende Feder 56 in die erste Aufnahmeöffnung 54a gedrückt, so dass der Verriegelungszustand_{'} gemäß Figur 4 erreicht ist.

Wie es gemäß der Figuren 4 bis 8 verdeutlicht ist, führt das Verriegelungselement 51, insbesondere der Nocken 53 während der Bewegung des Sperrgliedes 10 in seine jeweilige Stellung 1, 2 eine pendelartige Bewegung relativ zum Hebel 22 innerhalb der Kulisse 52 aus. Das bedeutet, dass von der Verriegelungsstellung 1 in die Entriegelungsstellung 2 der Nocken 53 aus dem Arretierbereich 52c zunächst zum ersten Anschlagbereich 52a verläuft und anschließend wieder zurück zum Arretierbereich 52c gelangt. Von der Entriegelungsstellung 2 zur Verriegelungsstellung 1 hingegen pendelt der Nocken 53 ausgehend vom Arretierbereich 52c zunächst in Richtung des zweiten Anschlagbereichs 52b bevor der Nocken 53 wiederum zurück in den Arretierbereich 52c geführt wird. Diese besondere Kinematik sorgt für einen zuverlässigen Funktionsablauf bei der Ansteuerung des Sperrgliedes 10, wobei gleichzeitig eine sehr kompakte Anordnung des Getriebes 20 erreicht wird. Die wesentlichen Elemente der Arretiervorrichtung 50, insbesondere das Verriegelungselement 51 sowie die Kontur der Kulisse 52 dienen gleichzeitig als notwendige Bestandteile des Getriebes 20, um eine entsprechende Kraftübertragung vom Übertragungsglied 21 über den Hebel 22 auf das Sperrglied 10 zu erreichen. Neben der eigentlichen Arretierfunktion des Verriegelungselementes 51 ist somit das Verriegelungselement 51 gleichzeitig ein wesentliches Bauteil des Getriebes 20, um das Sperrglied 10 in seine jeweilige Stellung zu bringen.

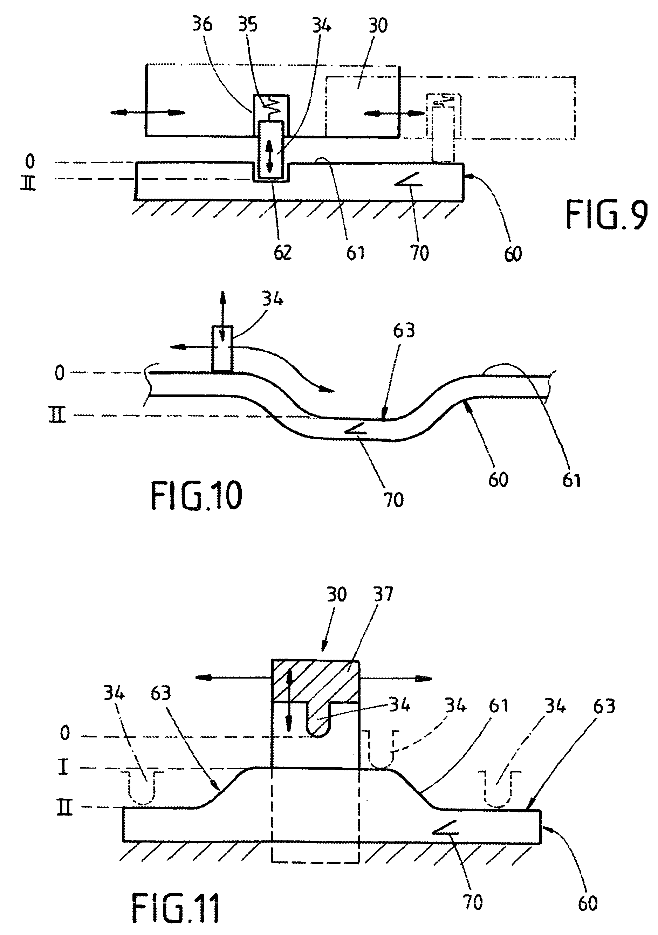

In den Figuren 9 bis 11 sind mögliche Positionserfassungseinheiten 60 dargestellt, die erst bei einer definierten Stellung der Lenkungseinheit des Motorrades, die explizit nicht dargestellt ist, eine Bewegung des Sperrgliedes in die Verriegelungsstellung gemäß den Figuren 1 bis 8 zulassen. In Figur 9 ist die Betätigungseinheit 30 dargestellt, die mit der Lenkungseinheit verbunden ist, wobei über eine Bewegung der Lenkungseinheit gleichzeitig eine Bewegung der Betätigungseinheit 30 gemäß des dargestellten Doppelpfeils ausführbar ist. Die Positionserfassungseinheit 60 ist rahmenseitig fest mit dem Motorrad verbunden. Hierbei ist die Positionserfassungseinheit 60 mit einer Kontur 61 ausgebildet, die mit einer Öffnung 62 versehen ist. An der Betätigungseinheit 30 ist ein stiftartiges Aktivierungselement 34 angeordnet, welches in einer Führung 36 innerhalb der Betätigungseinheit 30 durch eine Feder 35 federbelastet gelagert ist.

Das Aktivierungselement 34 kann zwischen einer Ruhestellung 0 und einer Aktivierungsstellung II bewegt werden. In Abhängigkeit von der Stellung der Lenkungseinheit sowie der Betätigungseinheit 30 ist die Stellung 0, II des Aktivierungselementes 34 abhängig. Figur 9 zeigt die Ruhestellung 0 des Aktivierungselementes 4, bei der das Aktivierungselement 34 auf der Kontur 61 der Positionserfassungseinheit 60 aufliegt. Wird die Lenkungseinheit verschwenkt, um in einer definierten Stellung der Lenkungseinheit eine Verriegelung des Sperrgliedes 10 gemäß den Figuren 1 bis 9 auszulösen, fährt das Aktivierungselement 34 zunächst entlang der Kontur 61 der Positionserfassungseinheit 60. Erreicht die Lenkungseinheit sowie die Betätigungseinheit 30 eine definierte Stellung, fährt das Aktivierungselement 34 gemäß Figur 9 in die Öffnung 62 der Positionserfassungseinheit 60. Erreicht das Aktivierungselement 34 seine Aktivierungsstellung II, wird dieses durch einen Schalter 70 erkannt, der anschließend das Getriebe 20 gemäß Figur 1 bis Figur 8 zur Bewegung des Sperrgliedes 10 in die Verriegelungsstellung 1 elektronisch ansteuert.

In Figur 10 ist eine weitere Variante der Positionserfassungseinheit 60 gemäß Figur 9 dargestellt, wobei das Aktivierungselement 34 sich in seiner Ruhestellung 0 befindet.

Hierbei ist das Aktivierungselement 34 beweglich in der Betätigungseinheit gelagert, die nicht explizit dargestellt ist. Die Kontur 61 der Positionserfassungseinheit 60 ist mit einer Ausbuchtung 63 ausgeführt. Wird die Lenkungseinheit sowie die Betätigungseinheit in eine entsprechende Position durch den Benutzer bewegt bzw. verschwenkt, fährt wie in Figur 9 bereits beschrieben, das Aktivierungselement 34 entlang der Kontur 61 der Positionserfassungseinheit 60. Erreicht das Aktivierungselement 34 die Ausbuchtung 63, befindet sich das Aktivierungselement 34 in seiner Aktivierungsstellung II, bei der wie in Figur 9 bereits erläutert, das Getriebe 20 durch einen Schalter 30 zur Bewegung des Sperrgliedes 10 in die Verriegelungsstellung 1 angesteuert wird.

In Figur 10 ist das Aktivierungselement 34 vorsprungartig in Richtung der Positionserfassungseinheit 60 ausgeführt. Hierbei weist die Betätigungseinheit 30 eine Kappe 37 auf, die vom Benutzer betätigt werden kann, wobei die Kappe 37 bei Betätigung entsprechend des Doppelpfeiles am feststehenden Grundkörper der Betätigungseinheit 30 bewegbar ist. Wie gezeigt ist, ist die Kappe 37 mit dem Aktivierungselement 34 ausgebildet. Um eine Verriegelung des Sperrgliedes gemäß Figur 1 bis Figur 8 durch den Benutzer zu bewirken, drückt der Benutzer gemäß Figur 11 sowie in Figur 9 und Figur 10, zunächst auf die Betätigungseinheit 30, die hierdurch in Richtung Positionserfassungseinheit 60 bewegt wird. Befindet sich die Lenkungseinheit nicht in ihrer entsprechenden eingeschlagenen Position, um eine Verriegelung des Sperrgliedes auszulösen, erreicht das Aktivierungselement 34 in den Figuren 9 bis Figur 11 nicht den Wirkbereich 62, 63, das bedeutet gemäß Figur 9 fährt das Aktivierungselement 34 nicht in die Öffnung 62, gemäß Figur 11 fährt das Aktivierungselement 34 nicht in die Ausbuchtung 63 sowie gemäß Figur 10 erreicht das Aktivierungselement 34 lediglich die Zwischenposition I, wo es mit seinem freien Ende die Kontur 61 außerhalb der Ausbuchtung 63 berührt.

Zurückkommend auf die Figur 10 erreicht das Aktivierungselement 34 seine Aktivierungsstellung II, falls eine definierte, eingeschlagene Stellung der Lenkungseinheit erreicht ist. Auch in der Figur 10 sorgt ein Schalter 70 dafür, dass bei Erreichung der Aktivierungsstellung II des Aktivierungselementes 34 das Getriebe 20 zur Bewegung des Sperrgliedes 10 in die Verriegelungsstellung 1 angesteuert wird. Beispielsweise ist es denkbar, dass bei Erreichung der Zwischenstellung I des Aktivierungselementes 34 die Zündung des Kraftfahrzeuges, hier Motorrad, eingeleitet wird. Eine entsprechende Zwischenstellung I gemäß Figur 9 und 10 ist ebenfalls denkbar. Des Weiteren ist die Anordnung des Schalters 70 gemäß der Figuren 9 bis Figur 11 lediglich schematisch dargestellt. Die genaue Positionierung des Schalters 70 kann hierbei beispielsweise an der fest am Kraftfahrzeug angeordneten Positionserfassungseinheit 60 vorgesehen sein. Ebenfalls ist es denkbar, dass der Schalter an der Betätigungseinheit 30 oder an benachbarten Bauteilen angeordnet ist. Der Schalter kann beispielsweise ein Hallsensor sein. In allen Ausführungsbeispielen bietet es sich an, zwei voneinander beabstandeten Wirkbereichen 62, 63 vorzusehen, damit der Benutzer sowohl bei einem Einschlag der Lenkungseinheit nach links als auch nach rechts eine Verriegelung der Lenksäule 40 bewirken kann.

### Bezugszeichenliste

- 1: Verriegelungsstellung
- 2: Entriegelungsstellung
- 3: erste Position
- 4: zweite Position
- 5: Ruhelage
- 6: Betätigungslage

- 10: Sperrglied
- 11: Achse
- 12: Achse

- 20: Getriebe
- 21: Übertragungsglied
- 21 a: Kulissenführung
- 22: Hebel
- 23: Kontaktbereich
- 24: Achse
- 25: Elektromotor
- 26: Verzahnungsbereich
- 27: Hülse

- 30: Betätigungseinheit
- 31: Betätigungselement
- 32: Aufnahmekörper
- 33: Notschlüssel
- 34: Aktivierungselement
- 35: Feder
- 36: Führung
- 37: Kappe

- 40: funktionswesentliches Bauteil
- 41: Nut

- 50: Arretiervorrichtung
- 51: Verriegelungselement
- 52: Kulisse
- 52a: erster Anschlagbereich
- 52b: zweiter Anschlagbereich
- 52c: Arretierbereich
- 53: Nocken
- 54a: erste Aufnahmeöffnung
- 54b: zweite Aufnahmeöffnung
- 55: Widerlager
- 56: Feder

- 60: Positionserfassungseinheit
- 61: Kontur
- 62: Öffnung
- 63: Ausbuchtung

- 70: Schalter

- 0: Ruhestellung
- I: Zwischenstellung
- II: Aktivierungsstellung

## Patentansprüche

1. Vorrichtung zur Ansteuerung eines Sperrgliedes (10) eines funktionswesentlichen Bauteils (40), insbesondere einer Lenksäule (40) eines Kraftfahrzeuges,
mit einem Getriebe (20), das mit dem Sperrglied (10) in mechanischer Wirkverbindung steht, wobei das Sperrglied (10) in eine Verriegelungsstellung (1) und in eine Entriegelungsstellung (2) und umgekehrt bewegbar ist, wobei
in der Verriegelungsstellung (1) das Sperrglied (10) in das funktionswesentliche Bauteil (40) eingreift,
in der Entriegelungsstellung (2) das Sperrglied (10) losgelöst vom funktionswesentlichen Bauteil (40) ist,
eine für einen Benutzer zugängliche Betätigungseinheit (30) vorgesehen ist, die in einem Normalbetrieb mit dem Getriebe (20) in Signalverbindung steht, wodurch über eine bewusste Aktivierung der Betätigungseinheit (30) eine elektronische Ansteuerung des Getriebes (20) bewirkbar ist, das das Sperrglied (10) in seine jeweilige Stellung (1,2) bringt,
**dadurch gekennzeichnet,**
**dass** die Betätigungseinheit (30) im Normalbetrieb vom Getriebe (20) mechanisch entkoppelt ist und in einem Notfallbetrieb die Betätigungseinheit (30) derart mit dem Getriebe (20) mechanisch koppelbar ist, dass über eine manuelle Betätigung der Betätigungseinheit (30) eine Bewegung des Sperrgliedes (10) in seine jeweilige Stellung (1,2) erfolgt.

2. Vorrichtung nach Anspruch 1,
**dadurch gekennzeichnet,**
**dass** das Getriebe (20) eine Arretiervorrichtung (50) aufweist, die das Sperrglied (10) in seiner jeweiligen Stellung (1,2) hält und/oder dass das Getriebe (20) ein huberzeugendes Übertragungsglied (21) aufweist, das auf einen Hebel (22) wirkt, der zwischen dem Übertragungsglied (21) und dem Sperrglied (10) bewegbar angeordnet ist.

3. Vorrichtung nach einem der vorgenannten Ansprüche,
**dadurch gekennzeichnet,**
**dass** die Arretiervorrichtung (50) ein Verriegelungselement (51) aufweist, das in einer Kulisse (52) geführt ist und/oder dass das Verriegelungselement (51) derart an der Arretiervorrichtung (50) angeordnet ist, dass das Verriegelungselement (51) zwischen einer ersten (3) und einer zweiten Position (3) entlang der Kulisse (52) bewegbar ist, wobei
in der Verriegelungsstellung (1) und in der Entriegelungsstellung (2) die Arretiervorrichtung (50) das Sperrglied (10) sichernd hält, während das Verriegelungselement (51) sich in der ersten Position (4) befindet,
das Verriegelungselement (51) während der Bewegung des Sperrgliedes (10) zwischen der Verriegelungsstellung (1) und der Entriegelungsstellung (2) sich in der zweiten Position (4) befindet.

4. Vorrichtung nach Anspruch 3,
**dadurch gekennzeichnet,**
**dass** der Hebel (22) mit der Kulisse (52) ausgebildet ist, in der ein Nocken (53) des Verriegelungselementes (51) eingreift.

5. Vorrichtung nach einem der vorgenannten Ansprüche,
**dadurch gekennzeichnet,**
**dass** der Hebel (22) und das Sperrglied (10) drehbar um eine Achse (11) gelagert sind, wobei insbesondere der Hebel (22) und das Sperrglied (10) um die gleiche Achse (11) verschwenkbar sind.

6. Vorrichtung nach einem der vorgenannten Ansprüche,
**dadurch gekennzeichnet,**
**dass** der Hebel (22) mit einem vorsprungartigen Kontaktbereich (23) ausgeführt ist, der in eine spiralartige Kulissenführung (21a) des um eine Achse (24) drehbaren Übertragungsgliedes (21) eingreift und/oder dass die Kulisse (52) einen ersten (52a) und einen zweiten Anschlagbereich (52b) sowie einen Arretierbereich (52c) aufweist, wobei
in der Verriegelungsstellung (1) und in der Entriegelungsstellung (2) des Sperrgliedes (10) der Nocken (53) am Arretierbereich (52c) anliegt,
während der Bewegung des Sperrgliedes (10) von der Verriegelungsstellung (1) in die Entriegelungsstellung (2) der Nocken (53) am ersten Anschlagbereich (52a) anliegt,
während der Bewegung des Sperrgliedes (10) von der Entriegelungsstellung (2) in die Verriegelungsstellung (1) der Nocken (53) am zweiten Anschlagbereich (52b) anliegt.

7. Vorrichtung nach einem der vorgenannten Ansprüche,
**dadurch gekennzeichnet,**
**dass** während der Bewegung des Sperrgliedes (10) in seine jeweilige Stellung (1,2) das Verriegelungselement (51) eine pendelartige Bewegung relativ zum Hebel (22) innerhalb der Kulisse (52) ausführt und/oder dass das Verriegelungselement (51) beweglich am Sperrglied (10) gelagert ist.

8. Vorrichtung nach einem der vorgenannten Ansprüche,
**dadurch gekennzeichnet,**
**dass** die Betätigungseinheit (30) ein Betätigungselement (31) sowie einen Aufnahmekörper (32) aufweist, in den für den Notfallbetrieb ein Notschlüssel (33) einbringbar ist.

9. Vorrichtung nach einem der vorgenannten Ansprüche,
**dadurch gekennzeichnet,**
**dass** die Betätigungseinheit (30) zwischen einer Ruhelage (5) und einer Betätigungslage (6) bewegbar ist, wobei in der Ruhelage (5) die Betätigungseinheit (30) losgelöst zum Getriebe (20) positioniert ist und in der Betätigungslage (6) die Betätigungseinheit (30) in Wirkverbindung mit dem Getriebe (20) ist.

10. Vorrichtung nach einem der vorgenannten Ansprüche,
**dadurch gekennzeichnet,**
**dass** das Betätigungselement (31) einen Näherungssensor oder einen Berührungssensor aufweist.

11. Vorrichtung nach einem der vorgenannten Ansprüche,
**dadurch gekennzeichnet,**
**dass** für den Normalbetrieb das Betätigungselement (31) den Aufnahmekörper (32) abschirmt, insbesondere das Betätigungselement (31) ein Anzeigemittel aufweist, das zur Darstellung von Informationen dient.

12. Vorrichtung nach einem der vorgenannten Ansprüche,
**dadurch gekennzeichnet,**
**dass** eine Positionserfassungseinheit (60) vorgesehen ist, die erst bei einer definierten Stellung der Lenkungseinheit des Kraftfahrzeuges eine Bewegung des Sperrgliedes (10) in die Verriegelungsstellung (1) erlaubt und/oder dass die Positionserfassungseinheit (60) mechanisch die Position der Lenkungseinheit erfasst und über einen Schalter (70) in Abhängigkeit von der Position der Lenkungseinheit das Getriebe (20) ansteuerbar ist, um das Sperrglied (10) in die Verriegelungsstellung (1) zu bringen.

13. Vorrichtung nach Anspruch 12,
**dadurch gekennzeichnet,**
**dass** die Betätigungseinheit (30) an der Lenkungseinheit angeordnet ist, wobei die Positionserfassungseinheit (60) über der Position der Betätigungseinheit (30) eine entsprechende Bewegung des Sperrgliedes (10) auslöst, wobei insbesondere die Betätigungseinheit (30) ein Aktivierungselement (34) aufweist, die mit einer Kontur (61) der Positionserfassungseinheit (60) zusammenwirkt.

14. Vorrichtung nach einem der vorgenannten Ansprüche,
**dadurch gekennzeichnet,**
**dass** das Aktivierungselement (34) zwischen einer Ruhestellung (0) und einer Aktivierungsstellung (II) bewegbar ist, wobei in der Aktivierungsstellung (II) der Schalter (70) eine Bewegung des Sperrgliedes (10) in die Verriegelungsstellung (1) auslöst.

15. Vorrichtung nach Anspruch 13 oder 14,
**dadurch gekennzeichnet,**
**dass** die Kontur (61) mit einem Wirkbereich (62,63) ausgeführt ist, in dem sich das Aktivierungselement (34) in seiner Aktivierungsstellung (II) befindet, wobei der Wirkbereich als Öffnung (62), Einbuchtung oder Ausbuchtung (63) ausgeführt ist.

## Claims

1. Device for controlling a blocking member (10) of a function-essential construction element (40), in particular a steering column (40) of a vehicle,
comprising a gear drive (20) mechanically linked to the locking member (10), whereby the blocking member (10) is movable into a locking position (1) and an unlocking position (2) and vice versa,
in the locking position (1) the locking member (10) is engaged with the function-essential construction element (40),
in the unlocking position (2) the locking member (10) is uncoupled from the function-essential construction element (40),
comprising an operation device (30) accessible for the user, developing a signal connection to the gear drive (20) in its normal mode, whereby an electrical activation of the gear drive (20) is effectable via a cognizant activation of the operation device (30), transferring the locking member (10) in its respective position (1, 2),
**characterized in that**,
the operation device (30) is mechanically uncoupled from the gear drive (20) in its normal mode and in an emergency mode the operation device (30) is mechanically engaged to the gear drive (20) such that a movement of the locking member (10) in its respective position (1, 2) occurs via a manual operation of the operation device (30).

2. Device according to claim 1,
**characterized in that**, the gear drive (20) comprises an arresting device (50), retaining the locking member (10) in its respective position (1, 2) and/or the gear drive (20) comprising a lift-producing conveying element (21), acting on a crank arm (22) beeing movably assembled between the conveying element (21) and the locking member (10).

3. Device according to one of the proceeding claims,
**characterized in that**, the arresting device (50) comprises a locking element (51) maintained in a connecting rod (52) and/or the locking element (51) is assembled to the arresting device (50) such that the locking element (51) is movable between a first (3) and a second position (4) alongside a connecting rod (52), whereby
in the locking position (1) and in the unlocking position (2) the arresting device (50) is securely retaining the locking member (10), while the locking element (51) is in its first position (3),
the locking element (51) is arranged in its second position (4) during the movement of the locking member (10) between its locking position (1) and its unlocking position (2).

4. Device according to claim 3,
**characterized in that**, the crank arm (22) is shaped with a connecting rod (52) in which a cam lobe (53) of the locking element (51) is interfering.

5. Device according to one of the proceeding claims,
**characterized in that**, the crank arm (22) and the locking member (10) are pivot-mounted about an axis (11), whereby in particular the crank arm (22) and the locking member (10) are pivotable about the same axis (11).

6. Device according to one of the proceeding claims,
**characterized in that**, the crank arm (22) is comprising a projection-like contact area (23), engaged with a spiral connecting rod guide (21a) of the conveying element (21) being pivotable about one axis (24) and/or the connecting rod (52) comprises a first (52a) and a second limiting area (52b) as well as an arresting area (52c), whereby
in the locking position (1) and in the unlocking position (2) of the locking member (10) the cam lobe (53) is resting at the arresting area (52c),
during the movement of the locking member (10) from the locking position (1) into the unlocking position (2) the cam lobe (53) is resting at the first limiting area (52a),
during the movement of the locking member (10) from the unlocking position (2) into the locking position (1) the cam lobe (53) is resting at the second limiting area (52b).

7. Device according to one of the proceeding claims,
**characterized in that**, during the movement of the locking member (10) in its respective positions (1, 2), the locking element (51) performs a pendulous movement relatively to the crank arm (22) within the connecting rod (52) and/or the locking element (51) is resting at the locking member (10) in a flexible way.

8. Device according to one of the proceeding claims,
**characterized in that**, the operation device (30) comprises an operation element (31) as well as a receiving body (32) in which an emergency key (33) is insertable in a case of emergency.

9. Device according to one of the proceeding claims,
**characterized in that**, the operation device (30) is movable between a resting position (5) and an operating position (6), whereby in the resting position (5) the operation device (30) is detached from the gear drive (20) and in the operating position (6) the operation device (30) is in an operative connection with the gear drive (20).

10. Device according to one of the proceeding claims,
**characterized in that**, the operation device (30) comprises a proximity sensor or a tactile sensor.

11. Device according to one of the proceeding claims,
**characterized in that**, the operation element (31) is insulating the receiving body (32) in the normal mode, in particular the operation element (31) comprises a notification means serving to present information.

12. Device according to one of the proceeding claims,
**characterized in that**, a position recording unit (60) is intended allowing a movement of the locking member (10) into its locking position (1) not before the steering unit of the vehicle is arranged in a defined position and/or the position recording unit (60) is mechanically capturing the position of the of the steering unit and via a switch (70) the gear drive (20) is actuatable in reference to the position of the steering unit to transfer the locking member (10) in its locking position (1).

13. Device according to claim 12,
**characterized in that**, the operation device (30) is assembled at the steering unit, the position recording unit (60) is initiating a corresponding movement of the locking member (10) whereby in particular of the position of the operation device (30) is comprising an activating element (34) cooperating with the contour (61) of the position recording unit (60).

14. Device according to one of the proceeding claims,
**characterized in that**, the activating element (34) is movable between a resting position (0) and an activation position (II), in the activation position (II) the switch (70) is causing a movement of the locking member (10) in the locking position (1).

15. Device according to claim 13 or 14,
**characterized in that**, the contour (61) comprises an effective range (62, 63) with the activating element (34) in its activation position (II),
the effective range is shaped as an opening (62), a notch or a bulge (63).

## Revendications

1. Dispositif de commande d'un organe de blocage (10) d'une pièce structurelle (40) fonctionnellement essentielle, en particulier d'une colonne de direction (40) de véhicule automobile,
comprenant une transmission (20) en liaison mécanique opérante avec ledit organe de blocage (10), lequel organe de blocage (10) est mobile vers une position de verrouillage (1) et vers une position de déverrouillage (2), et inversement, sachant
que, dans la position de verrouillage (1), l'organe de blocage (10) pénètre dans la pièce structurelle (40) fonctionnellement essentielle,
que, dans la position de déverrouillage (2), ledit organe de blocage (10) est dissocié d'avec ladite pièce structurelle (40) fonctionnellement essentielle,
qu'une unité d'actionnement (30), accessible par un utilisateur, est en liaison d'échange de signaux avec la transmission (20) en mode opératoire normal, de telle sorte qu'une activation délibérée de ladite unité d'actionnement (30) puisse gouverner une activation électronique de ladite transmission (20) amenant l'organe de blocage (10) à sa position considérée (1, 2),
**caractérisé par le fait**
**que** l'unité d'actionnement (30) est découplée mécaniquement de la transmission (20) en mode opératoire normal et peut être couplée mécaniquement à ladite transmission (20), en mode fonctionnement d'urgence, de façon telle qu'une action manuelle, exercée sur ladite unité d'actionnement (30), se traduise par un mouvement de l'organe de blocage (10) vers sa position considérée (1, 2).

2. Dispositif selon la revendication 1,
**caractérisé par le fait**
**que** la transmission (20) comporte un dispositif d'arrêt (50) qui maintient l'organe de blocage (10) dans sa position considérée (1, 2) ; et/ou par le fait que ladite transmission (20) présente un organe de transmission (21) générateur de courses, qui agit sur un levier (22) interposé, avec faculté de mouvement, entre ledit organe de transmission (21) et ledit organe de blocage (10).

3. Dispositif selon l'une des revendications précédentes,
**caractérisé par le fait**
**que** le dispositif d'arrêt (50) est pourvu d'un élément de verrouillage (51) guidé dans un profil de coulissement (52) ; et/ou par le fait que ledit élément de verrouillage (51) occupe, sur ledit dispositif d'arrêt (50), une position telle que ledit élément de verrouillage (51) puisse être mis en mouvement entre des premier (3) et second (4) emplacements, le long dudit profil de coulissement (52), sachant
**que** le dispositif d'arrêt (50) consigne l'organe de blocage (10) à demeure dans la position de verrouillage (1) et dans la position de déverrouillage (2), alors que l'élément de verrouillage (51) se trouve au premier emplacement (3),
**que** ledit élément de verrouillage (51) se trouve au second emplacement (4) au cours du mouvement dudit organe de blocage (10) entre ladite position de verrouillage (1) et ladite position de déverrouillage (2).

4. Dispositif selon la revendication 3,
**caractérisé par le fait**
**que** le levier (22) est muni du profil de coulissement (52), dans lequel pénètre un mentonnet (53) de l'élément de verrouillage (51).

5. Dispositif selon l'une des revendications précédentes,
**caractérisé par le fait**
**que** le levier (22) et l'organe de blocage (10) sont montés à rotation autour d'un axe (11), ledit levier (22) et ledit organe de blocage (10) étant notamment aptes à pivoter autour du même axe (11).

6. Dispositif selon l'une des revendications précédentes,
**caractérisé par le fait**
**que** le levier (22) est doté d'une zone de contact (23) du type mentonnet, qui pénètre dans un profil spiroïdal (21a) de guidage coulissant, ménagé dans l'organe de transmission (21) pouvant tourner autour d'un axe (24) ; et/ou par le fait que le profil de coulissement (52) comprend des première (52a) et seconde (52b) zones de butée, ainsi qu'une zone d'arrêt (52c), sachant que
le mentonnet (53) est en applique contre la zone d'arrêt (52c) lorsque l'organe de blocage (10) occupe la position de verrouillage (1) et la position de déverrouillage (2),
ledit mentonnet (53) est en applique contre la première zone de butée (52a) au cours du mouvement dudit organe de blocage (10) de ladite position de verrouillage (1) à ladite position de déverrouillage (2),
ledit mentonnet (53) est en applique contre la seconde zone de butée (52b) au cours du mouvement dudit organe de blocage (10) de ladite position de déverrouillage (2) à ladite position de verrouillage (1).

7. Dispositif selon l'une des revendications précédentes,
**caractérisé par le fait**
**que** l'élément de verrouillage (51) effectue un mouvement pendulaire vis-à-vis du levier (22), à l'intérieur du profil de coulissement (52), au cours du mouvement de l'organe de blocage (10) vers sa position considérée (1, 2) ; et/ou par le fait que ledit élément de verrouillage (51) est monté mobile sur ledit organe de blocage (10).

8. Dispositif selon l'une des revendications précédentes,
**caractérisé par le fait**
**que** l'unité d'actionnement (30) comprend un élément d'actionnement (31), ainsi qu'un corps récepteur (32) dans lequel une clé d'urgence (33) peut être insérée en mode fonctionnement d'urgence.

9. Dispositif selon l'une des revendications précédentes,
**caractérisé par le fait**
**que** l'unité d'actionnement (30) est mobile entre une position de repos (5) et une position de manoeuvre (6), ladite unité d'actionnement (30) étant dissociée d'avec la transmission (20) dans ladite position de repos (5), et ladite unité d'actionnement (30) étant en liaison opérante avec ladite transmission (20) dans ladite position de manoeuvre (6).

10. Dispositif selon l'une des revendications précédentes,
**caractérisé par le fait**
**que** l'élément d'actionnement (31) présente un détecteur de proximité ou un détecteur de contact.

11. Dispositif selon l'une des revendications précédentes,
**caractérisé par le fait**
**que** l'élément d'actionnement (31) procure un écran au corps récepteur (32) en mode opératoire normal, ledit élément d'actionnement (31) étant notamment pourvu d'un moyen d'affichage servant à la visualisation d'informations.

12. Dispositif selon l'une des revendications précédentes,
**caractérisé par**
la présence d'une unité (60) détectrice d'emplacements, qui n'autorise un mouvement de l'organe de blocage (10), vers la position de verrouillage (1), que lorsque l'unité de braquage du véhicule automobile occupe une position bien définie ; et/ou par le fait que ladite unité (60) détectrice d'emplacements détecte mécaniquement l'emplacement de ladite unité de braquage, la transmission (20) pouvant être activée par l'intermédiaire d'un commutateur (70), en fonction de l'emplacement de ladite unité de braquage, afin d'amener ledit organe de blocage (10) à ladite position de verrouillage (1).

13. Dispositif selon la revendication 12,
**caractérisé par le fait**
**que** l'unité d'actionnement (30) est implantée sur l'unité de braquage, sachant que l'unité (60) détectrice d'emplacements déclenche un mouvement correspondant de l'organe de blocage (10) au-dessus de l'emplacement de ladite unité d'actionnement (30), laquelle unité d'actionnement (30) est notamment munie d'un élément d'activation (34) qui coopère avec un profilage (61) de ladite unité (60) détectrice d'emplacements.

14. Dispositif selon l'une des revendications précédentes,
**caractérisé par le fait**
**que** l'élément d'activation (34) est mobile entre une position de repos (0) et une position d'activation (II), le commutateur (70) déclenchant, dans ladite position d'activation (II), un mouvement de l'organe de blocage (10) vers la position de verrouillage (1).

15. Dispositif selon la revendication 13 ou 14,
**caractérisé par le fait**
**que** le profilage (61) est pourvu d'une zone opérante (62, 63) dans laquelle l'élément d'activation (34) se trouve lorsqu'il occupe sa position d'activation (II), ladite zone opérante revêtant la forme d'un orifice (62), d'un bombement rentrant ou d'un bombement saillant (63).
